**Europäisches Patentamt**

**European Patent Office**

**Office européen des brevets**

(19)

(11) Veröffentlichungsnummer: **0 102 557 B2**

(12) **NEUE EUROPÄISCHE PATENTSCHRIFT**

(45) Veröffentlichungstag der neuen Patentschrift:
**10.04.91 Patentblatt 91/15**

(51) Int. Cl.⁵: **A01B 49/06, A01C 7/00**

(21) Anmeldenummer: **83107929.8**

(22) Anmeldetag: **11.08.83**

(54) **Sämaschine.**

(30) Priorität: **23.12.82 DE 3247884**
**11.08.82 DE 3229912**

(43) Veröffentlichungstag der Anmeldung:
**14.03.84 Patentblatt 84/11**

(45) Bekanntmachung des Hinweises auf die
Patenterteilung:
**12.08.87 Patentblatt 87/33**

(45) Bekanntmachung des Hinweises auf die
Entscheidung über den Einspruch:
**10.04.91 Patentblatt 91/15**

(84) Benannte Vertragsstaaten:
**AT DE FR GB IT NL SE**

(56) Entgegenhaltungen:
**EP-A- 0 015 800**
**EP-A- 0 049 330**
**CH-A- 104 255**
**DE-A- 2 040 010**
**DE-A- 2 621 265**
**DE-A- 3 028 382**

(56) Entgegenhaltungen:
**DE-C- 159 486**
**DE-C- 401 879**
**DE-U- 7 814 039**
**DK-A- 70 444**
**FR-A- 2 222 927**
**GB-A- 1 094 681**
**GB-A- 1 110 043**
**JP-A- 4 010 921**
**SU-A- 378 152**
**US-A- 971 990**
**US-A- 1 237 446**
**US-A- 1 407 407**
**US-A- 2 261 893**

(73) Patentinhaber: **Horsch Maschinen GmbH**
**Harburger Strasse 5**
**W-8380 Landau a.d. Isar (DE)**

(72) Erfinder: **Horsch, Michael**
**Sitzenhof**
**W-8460 Schwandorf (DE)**

(74) Vertreter: **Wasmeier, Alfons, Dipl.-Ing. et al**
**Patentanwälte Dipl.-Ing. A.Wasmeier Dipl.-Ing.**
**H.Graf Postfach 382 Greflinger Strasse 7**
**W-8400 Regensburg 1 (DE)**

EP 0 102 557 B2

**Beschreibung**

Die Erfindung bezieht sich auf eine Vorrichtung mit den Merkmalen des Oberbegriffes des Anspruches 1.

Normalerweise erfolgt die Aussaat von körnigem Saatgut dadurch, daß das Erdreich umgepflügt und geeggt bzw. gefräst wird und anschliesend das Saatgut auf das derart vorbereitete Erdreich aufgegeben wird. Dann wird das Saatgut durch Walzen des Erdreiches eingedrückt.

In der DE-A 3.028.382 wird ein Verfahren beschrieben, gemäß dem das seit der letzten Ernte unveränderte Erdreich mit den Ernterückständen auf Saattiefe abgetragen und hochgeschleudert wird, das Saatgut während sich das Erdreich noch im Schwebezustand befindet, auf die so freigelegte Unterlage aufgegeben und anschließend von dem zerkleinerten abgetragenen Erdreich abgedeckt wird. Verwendet wird dabei eine Sävorrichtung mit einer einen angetriebenen Messerrotor aufweisenden Bodenfräze, sowie mit einzelnen nebeneinander angeordneten, von einem Säkasten aus gespeisten Austrittskanälen für das Saatgut, die in Fahrtrichtung gesehen hinter dem Messerrotor ausmünden. Bei einer solchen Sävorrichtung wird das Erdreich durch den Messerrotor aufgeworfen und das Saatgut wird in das aufgeworfene Erdreich eingebracht, so daß es mit den einzelnen Erdreichpartikeln gut vermischt in das Erdreich fällt. Dieser Mischvorgang ist jedoch unerwünscht. Es wird deshalb beim Stand der Technik eine sich über die Arbeitsbreite des Messerrotors erstreckende, das Werkzeug zum Boden hin abdeckende, in Fahrtrichtung hinter dem Werkzeug angeordnete, ein den Messerrotor tief untergreifendes Lockerungsschar aufweisende Leitschiene vorgesehen, die das von dem Lockerungsschar und dem Messerrotor aufgenommene Erdreich bogenförmig nach rückwärts lenkt, wobei die Austrittselemente für das Saatgut in das freie Innere dieses Erdreichbogens ausmünden. Der Messerrotor soll im Zusammenwirken mit dem Lockerungsschar das Erdreich in Höhe der Saattiefe abtragen und durch die nach oben gerichtete Ablenkung des abgetragenen Erdreiches in Form eines Bogens soll unter diesem Erdreichbogen min freier Raum entstehen, in den das Saatgut eingeführt wird.

Dieser Grundgedanke wird auch bereits in den 70iger Jahren von Professor Heege in Grundl. Landtechnik Bd. 20 (1970), Nr. 3, Seiten 82-84 ausgesprochen, jedoch zeigte sich, daß die für das zugrundeliegende Verfahren entwickelten Sävorrichtungen den an sie gestellten Forderungen nicht gerecht wurden, da es sehr schnell zu Verstopfungen im Bereich zwischen Leitschiene und Messerrotor kommt und damit ein ordnungsgemäßes Säen nicht mehr möglich ist.

Aus der GB-PS 1.094.681 ist eine Sävorrichtung bekannt die eine rotierende Bodenbearbeitungsvorrichtung aufweist, mit der der ungepflügte Boden bis zu einer vorgegebenen Tiefe abgearbeitet und das Gemisch aus Erdreich und Pflanzenrückständen nach rückwärts geschleudert wird. Dieses abgeschleuderte Gemisch trifft auf ein Leitblech auf, das die Wurfbahn dieses Gemisches verändert bzw. unterbricht und das Gemisch auf das von den Särohren ausgebrachte Sägut ablegt. Das Sägut wird dabei aus einem Vorratsbehälter über vertikale, im Abstand zueinander angeordnete und gleichmäßig über die Maschinenbreite versetzte Särohre ausgebracht, die den Raum hinter dem rotierenden Werkzeug durchsetzen, so daß das nach rückwärts geschleuderte Erd-Pflanzengemisch gegen diese Särohre trifft, an ihnen abprallt und zu Boden fällt. Das Ausbringen des Saatgutes erfolgt ausschließlich durch Schwerkraft, wobei das Saatgut am Austrittsende auf eine bodennahe Rüttelplatte fällt, über die das Saatgut auf den Boden verteilt wird. Da das Fräserwerkzeug nach dieser bekannten Vorrichtung keinerlei Vorkehrungen hat, die zumindest im Falle von schwerem, feuchtem Erdreich ein Abstreifen des vom Rotor mitgenommenen Erd-Pflanzengemisches gewährleistet, ist unter schwierigen Bodenverhältnissen ein Verstopfen oder Zusetzen dieser Vorrichtung unvermeidbar, insbes. auch zwischen den Särohren, da bei vielen Anwendungsfällen der Abstand zweier benachbarter Särohre relativ klein ist. Eine Breitsaat ist hierbei nicht möglich.

Aufgabe der Erfindung ist es, die bekannten Sämaschinen der gattungsgemäßen Art so zu verbessern, daß ein einwandfreies Ausbringen des Saatgutes ohne Gefahr von Verstopfungen möglich ist.

Diese Aufgabe wird erfindungsgemäß gelöst durch die Merkmale des kennzeichnenden Teiles des Hauptanspruches.

Durch den Wegfall des Lockerungsschars wird nicht nur eine Vereinfachung und Verbilligung des Maschinenaufbaus erreicht, sondern auch verhindert, daß vom Lockerungsschar hochgedrücktes Erdreich den Messerrotor übermäßig beansprucht. Da das Erdreich in den Messerrotor eingedrückt wird, wird es von ihm über seine volle Umdrehung mitgenommen und kommt mit neuem vom Lockerungsschar freigeschnittenen Erdreich in Kontakt, so daß sich die Verstopfung verstärkt. Wegen der zurückgesetzten Vorderkante der Leitschiene bei der Sävorrichtung nach der Erfindung entfällt hier diese Gefahr und durch den über der Leitschiene angeordneten Abstreifkörper wird jede Möglichkeit der Mitnahme von Erdreich durch den Messerrotor zum Erdreichberührungspunkt desselben ausgeschaltet. Es entsteht also tatsächlich ein freier Wurfbogen hinter der Bodenfräse, in den das Saatgut ungestört eingebracht werden kann.

Beim ungestörten bogenförmigen Hochschleudern des Erdreiches wie es bei der erfindungsgemäßen Sävorrichtung möglich ist, tritt darüberhinaus eine Trennung des Erdreichgutes vom Stroh auf, das als leichterer Bestandteil länger schwebt und später zurückfällt, so daß es nicht mehr mit dem Saatgut in Kontakt kommen kann, sondern sich abdeckend locker auf das locker aufgestreute Erdreich legt.

Besonders vorteilhaft ist es, daß der oberhalb der Leitschiene angeordnete, umlaufenden, langgestreckte Abstreifkörper in jedem Fall, allenfalls vom Messerrotor mitgenommenes verbakkenes oder verklebtes Erdreich endgültig absprengt, so daß dieses abgesprengte Erdreich zerkleinert in die Wurfparabel des hochgeschleuderten Erdreiches eingegliedert wird und gewährleistet ist, daß das schwerere derart gelöste Erdreich in das hochgeschleuderte schwerere Erdreich eingebunden wird, während das leichtere Stoppel- und Wurzelgut weiter fliegt und sich in das hochgeworfene Stoppelgut einordnet.

Der besondere Vorteil dieses Abstreifkörpers liegt darin, daß der Gesamtkraftaufwand für den Antrieb der Maschine erheblich verringert wird. Dieser Vorteil ist nicht von dem Einsatz der Maschine als Sävorrichtung abhängig, sondern wird auch bei jeder Bodenfräse als solcher erreicht. In einfachster Weise kann dieser Abstreifkörper als Vierkantbalken ausgebildet werden. Gegebenenfalls kann man ihn auch mit Paddeln besetzen.

Um den Wurfbogen des Erdreiches nicht zu stören, ist es vorteilhaft, wenn in weiterer Ausbildung der Erfindung die Austrittskanäle die Enden seitlich eingeführter Rohrbündel sind, deren Rohre in Stufen über die Arbeitsbreite des Messerrotors versetzt enden. Die Einführung des Saatgutes erfolgt also von der Seite her in den Wurfbogen des Erdreiches, wobei die einzelnen Austrittsöffnungen gleichmäßig über die Arbeitsbreite des rotierenden Werkzeuges verteilt werden können und damit die Ablage des Saatgutes auf dem festen Untergrund besonders gleichmäßig erfolgt.

Um eine noch bessere und gleichmäßigere Verteilung des Saatgutes zu erreichen, ist in weiterer Ausbildung der Erfindung vorgesehen, daß hinter und über den Austrittsöffnungen der Austrittskanäle ein querverlaufendes, das Saatgut streuendes und nach unten lenkendes Abdeckelement vorgesehen ist. Das Abdeckelement besteht vorzugsweise aus einer Gummiblende.

Dieses Abdeckelement streut das Saatgut und verhindert seine Mischung mit allenfalls aus dem Erdreichboden herabfallenden Erdreichbrocken oder dergl., so daß das Saatgut auch tatsächlich auf dem abgetragenen festen Untergrund zu liegen kommt.

Die Ausbildung dieser Abdeckschiene als Gummiblende hat den Vorteil, daß sich kein Erdreich oben auf der Abdeckung absetzen und damit den Arbeitsvorgang stören kann, insbes. aber die Ausbildung des Wurfbogens nicht gestört wird.

Vorzugsweise handelt es sich bei dem Messerrotor um einen Winkelmesserfräser mit einer quer zur Vorwärtsbewegung der Sävorrichtung verlaufenden Achse.

Die keilförmige Leitschiene ist vorteilhaft gegenüber dem Messerrotor ebenflächig bis leicht zum Messerrotor hin gewölbt ausgebildet und an der dem Erdreich benachbarten Kante abgerundet, wobei der Keilwinkel an dieser Kante zwischen 30° und 40° gewählt ist.

Die ebenflächige Ausbildung der keilförmigen Leitschiene gegenüber dem Messerrotor hat sich als besonders vorteilhaft erwiesen. Es bleibt von unten her genügend Raum, in den der Messerrotor eintreten kann, bis er an einer Tangentiallinie mit der Leitschiene praktisch in Berührung kommt. Im Anschluß daran öffnet sich der Spalt wieder, so daß mit Sicherheit gewährleistet ist, daß das vom Messerrotor abgenommene Erdreich in der gewünschten Weise in hohem Bogen nach hinten abgeschleudert wird. Gegebenenfalls kann zur Vergrößerung dieser Eintritts- und Austrittswinkel eine Wölbung der entsprechenden Fläche der keilförmigen Leitschiene in Richtung auf den Messerrotor vorgesehen werden. Die Abrundung der Leitschiene an der dem Erdreich benachbarten Kante führt dazu, daß die Leitschiene nicht in das Erdreich einschneidet, sondern über die freigelegte Erdreichfläche gleitet und damit ein Festfahren der erfindungsgemäßen Sävorrichtung praktisch vollständig verhindert ist.

Vorteilhaft ist die federnde Lagerung der Leitschiene so ausgebildet, daß die Leitschiene in Richtung auf den Messerrotor hin gedrückt wird. Durch die Federung wird jede Anpassung an das abgetragene Erdreich gewährleistet. Verklemmungen und Festsetzungen von harten Rückständen im Erdreich, wie Steinen, Verklumpungen oder dergl. im Bereich zwischen Messerrotor und Leitschiene sind damit praktisch vollständig ausgeschlossen.

Besonders vorteilhaft ist es, wenn die Leitschiene an einem Hebelsystem befestigt ist, dessen an dem Maschinenrahmen vorgesehene Schwenkachse in der Höhe und in und gegen die Fahrtrichtung der Sämaschine verstellbar ist. Es ist damit die optimale Einstellung der Leitschiene relativ zum Messerrotor möglich und zwar sowohl durch eine Schwenkbewegung dieses Hebelsystems als auch durch eine eventuell notwendig werdende Höhen- und/oder Horizontalverstellung in oder gegen die Fahrtrichtung.

Für die Abmessungen der auf dem Erdreich gleitenden Bodenfläche der Leitschiene gibt es optimale Werte, die in Beziehung stehen mit dem Abstand der Hinterkante der Leitschiene von der Berührungslinie des Abdeckelementes mit dem Erdreich. Vorzugsweise ist die in Fahrtrichtung gemessene Abmessung der Leitschiene $1_1$ in etwa annähernd gleich dem Abstand von der Hinterkante dieser Leitschiene bis zu der Erdreichberührungslinie des Abdeckelementes. Auf diese Weise ist gewährleistet, daß das Erdreich und die mitgeführten, ggfs. etwas zerkleinerten Stoppel auch weit genug über das Abdeckelement nach rückwärts fliegen und sich nicht auf dem Abdeckelement festsetzen und dieses beschwerend auf den Boden drücken, wo es ggfs. zu unerwünschten Verschiebungen des eingebrachten Saatgutes kommen könnte.

Von besonderem Vorteil ist bei der erfindungsgemäßen Sävorrichtung, daß mit ihr erstmalig eine tatsächliche Breitsaat durchgeführt werden kann. Man hat zwar bisher auch bereits versucht, eine Breitsaat durchzuführen, indem man im Boden vergleichsweise breite, zueinander parallel angeordnete Säscharen führte, hinter denen das Saatgut in Form eines Saatguttrichters aufgegeben wurde. Dabei ist es selbstverständlich unvermeidbar, daß sich die einzelnen Trichter überschneiden oder aber zwischen ihnen Freiflächen verbleiben. Bei der erfindungsgemäßen Sävorrichtung liegt eine breite, von darüberliegendem Erdreich befreite Erdreichfläche vor, auf der das Saatgut breit ausgestreut werden kann. Vorzugsweise bedient man sich dabei einer Ausführungsform der Sävorrichtung, mit einem am Maschinenrahmen sitzenden Druckluftsystem, das mit den Saatgutaustrittsöffnungen in Verbindung steht und in diese Druckluft liefert, und mit einem Saatgutbehälter, dessen Ausgang regelbar ist und in die zu den Saatgutaustrittsöffnungen führenden Druckluftleitungen einmündet. Mit Hilfe dieser Druckluftförderung des Saatgutes wird erreicht, daß sich an den einzelnen Austrittsöffnungen genau zu proportionierende Saatguttrichter bilden, so daß eine breitflächige Breitsaat möglich ist.

Dabei ist es zweckmäßig, daß der Druck der Druckluft, die Anordnung und der Abstand der Saatgutaustrittsöffnungen und die Anordnung und der Abstand des flexiblen Abdeckelementes so vorgewählt werden, daß sich die Saatgutaustrittsstreutrichter an den benachbarten Saatgutaustrittsöffnungen gegenseitig geringfügig überlappen. Durch das Aufprallen des Saatgutes am Abdeckelement wird auch das örtlich zuviel vorhandene Saatgut wieder getreut, so daß eine sehr gleichmäßige Breitsaat entsteht.

Von besonderem Vorteil ist es, wenn die zu den Saatgutaustrittsöffnungen führenden Rohre als Rohrsystem ausgebildet sind, das mit der Leitschiene integriert wird, so daß nicht nur eine kompakte Anordnung entsteht, sondern auch die gegebenenfalls durch Bodenberührung beanspruchte Leitschiene durch die durch diese Konstruktion hervorgerufene Versteifung solchen Beanspruchungen ohne weiteren widerstehen kann.

Im allgemeinen ist es zweckmäßig, das auf das Saatgut aufgeworfene Erdreich wieder etwas anzudrücken, so daß in weiterer Ausbildung der Erfindung die Sävorrichtung mit einer nachlaufenden Andruckwalze ausgerüstet werden sollte. Diese Andruckwalze kann dann als einzige unmittelbare Bodenabstützung der Sävorrichtung dienen.

Da es wesentlich ist, daß die Leitschiene ungestört über den freigelegten Boden gleiten kann und nicht seitlich irgendwie an stehengebliebenen Bodenresten anstößt, was sich bei der verwendeten Art des Messerrotors nicht unbedingt vermeiden läßt, wird in weiterer Ausbildung der Erfindung vorgesehen, daß am Maschinenrahmen an jedem Ende des Messerrotors ein Hohlscheibensech vorgesehen ist. Dieses Hohlscheibensech schneidet exakt in das Erdreich ein und fördert durch seine Ausbildung etwas Erdreich nach innen, wo es von der Fräse mit aufgenommen und nach hinten geschleudert wird. Die Leitschiene kann somit ungehindert über den freigelegten Boden hinweggleiten.

Die Zeichnung zeigt in

Fig. 1 eine schematische Seitenansicht einer Sävorrichtung nach der Erfindung,

Fig. 2 eine Teilrückansicht der Sävorrichtung,

Fig. 3 eine Teilansicht zur Darstellung der Anordnung der Austrittskanäle mit den versetzten Austrittsöffnungen,

Fig. 4 einen Teilausschnitt zur Wiedergabe eines bevorzugt verwendeten Winkelmesserfräsers als rotierendes Werkzeug mit angesetztem Hohlscheibensech.

Das Ausführungsbeispiel zeigt die Anwendung des Erfindungsprinzips auf eine Bodenfräse. Selbstverständlich sind auch andere Bodenbearbeitungsvorrichtungen möglich, wenn mit ihnen eine Schicht in Höhe der Saattiefe glatt abgetragen werden kann, ohne daß über die Arbeitsbreite Stege verbleiben, die das Vorrücken der Leitschiene beeinträchtigen würden. Gegebenenfalls kann man die Schiene federnd lagern, damit sig über nicht von der Bodenbearbeitungsvorrichtung gelockerte Steine ohne Gefahr der Beschädigung der Schiene hinweggleiten kann.

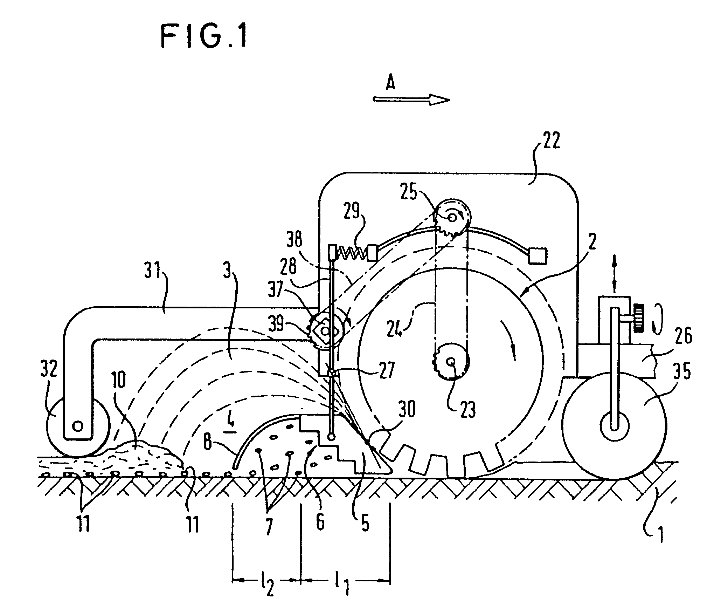

In Fig. 1 ist bei 1 das ungepflügte Erdreich zu erkennen, in das die Bodenfräse mit ihrem angetriebenen Messerrotor 2 eingreift. Es ist gezeigt, daß in Höhe der Saatguttiefe Erdreich abgetragen und in hohem Bogen bei 3 gegen die Fahrtrichtung A abgeschleudert wird. Der Bogen beläßt einen praktisch erdreichfreien Raum 4 dadurch, daß das Erdreich mit Hilfe einer Leitschiene 5 abgelenkt wird, die keilförmig ausgebildet ist. Diese Leitschiene enthält ferner ein Rohrbündel 6, das in den Austrittsöffnungen für die Ablage des Saatgutes 7 ausmündet. Außerdem ist beim wiedergegebenen Ausführungsbeispiel ein Abdeckelement 8 in Form einer Gummiblende vorgesehen, so daß aus dem Erdreichbogen 3 allenfalls herausfallendes Gut sich nicht mit dem Saatgut 7 mischen kann, sondern von diesem abgelenkt wird.

Der Abstreifkörper ist in Fig. 1 mit 37 bezeichnet. Er erhält seinem Antrieb von der Antriebswelle 25 die mit dem Traktorantrieb gekoppelt sein kann, über einen Kettentrieb 38 oder einen entsprechenden Zahnradzug, der das mit dem Abstreifkörper 37 gekoppelte Zahnrad 39 antreibt. Der Abstreifkörper

gekoppelte Zahnrad 39 antreibt. Der Abstreifkörper 37 ist in Fig. 1 als Vierkantbalken angedeutet. Auf ihm können gegebenenfalls Paddeln aufgesetzt sein.

Das bogenförmig abgeschleuderte Erdreich sammelt sich bei 10 als lockere Auflage auf dem Saatgut, das rein schematisch bei 11 angedeutet ist.

Das Saatgut wird über verschiedene nicht gezeichnete Schläuche aus einem nicht gezeichneten, von der Bodenbearbeitungsmaschine mitgeführten Säkasten zu dem Röhrenbündel 6 geführt.

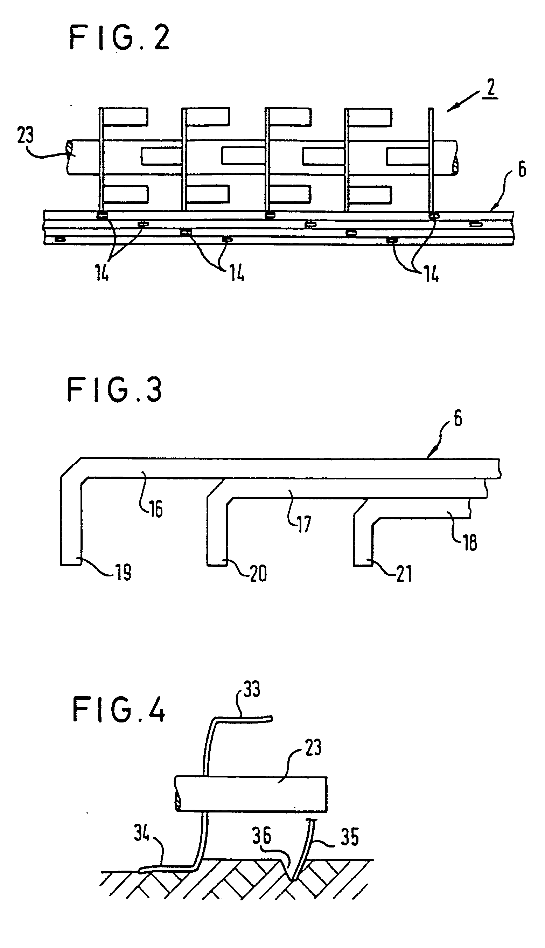

Bei der schematischen Rückansicht nach Fig. 2 ist die Verteilung der verschiedenen Saatgutaustrittsöffnungen 14 aus den einzelnen, das Rohrbündel 6 bildenden, beim wiedergegebenen Ausführungsbeispiel vorzugsweise quadratischen Querschnitt aufweisenden Rohren dargestellt.

Fig. 3 zeigt, daß diese verschiedenen Rohre 16, 17, 18 abgewinkelt sein können, um derart Sädüsen 19, 20, 21 zu bilden, die den Austrittsöffnungen 14 entsprechen.

In Fig. 1 ist mit 22 ferner ein Seitenrahmenteil der Sävorrichtung bezeichnet. In zwei solcher Seitenrahmenteile ist die Welle 23 des Messerrotors 2, z.B. eines Winkelmesserfräser gelagert, der nur schematisch teilweise dargestellt ist. Von der Welle 23 führt beispielsweise ein Kettentrieb oder Zahnradzug 24 zur Antriebswelle 25, die mit dem Traktorantrieb, d.h. dem Antrieb der Zugmaschine der Sävorrichtung gekoppelt sein kann. Diese Verbindung zur Zugmaschine ist beispielsweise durch die Deichsel 26 angedeutet.

Im Maschinenrahmen 22 ist bei 27 ein Doppelarmhebel 28 schwenkbar gelagert, der an seinem einen Ende die Leitschiene 5 trägt. Am anderen Ende ist eine Druckfeder 29 vorgesehen, so daß die Leitschiene 5 immer in Richtung der Tangentiallinie 30 an den Winkelmesserfräser 2 angedrückt wird. Man erkennt den Austrag des vom Erdreich abgefrästen Materials, das bogenförmig bei 3 nach rückwärts geschleudert wird. Aus den entsprechenden Saatgutaustragöffnungen tritt Saatgut 7 aus, das schematisch unterhalb des Abdeckelementes 8 angedeutet ist. Das Saatgut legt sich flach auf die freigefräste Fläche und wird mit dem abgefrästen Gut bedeckt. Beim wiedergegebenen Ausführungsbeispiel ist über ein Trägersystem 31 eine nachlaufende Walze 32 angedeutet, die das lockere Erdreich auf das Saatgut drückt und das einzige bodenstützende Element der Sävorrichtung ist, die am anderen Ende über die Deichsel 26 an der Zugmaschine befestigt ist.

In Fig. 1 erkennt man auch das Längenverhältnis $l_1 : l_2$ das in etwa 1 sein sollte.

In Fig. 4 ist die Welle 23 des Winkelmesserfräsers 2 angedeutet. Die Winkelmesser sind bei 33 und 34 zu erkennen. Man erkennt ein dem Fräser vorlaufendes Hohlscheibensech 35 (vgl. auch Fig. 1), das in das Erdreich eine Rinne 36 einschneidet und somit dafür Sorge trägt, daß die nachlaufende Leitschiene 5 immer auf den abgefrästen Boden zu liegen kommt und nicht seitlich gestört wird.

## Ansprüche

1. Vorrichtung zum Ausbringen von Sägut (7) mit einem sich über die gesamte Arbeitsbreite erstreckenden, angetriebenen, rotierenden Bodenbearbeitungswerkzeug (2), das das Gemisch aus gelöstem Erdreich und Pflanzenresten entgegen der Fahrtrichtung unter Bildung eines bodennahen, erdreichfreien Raumes in freier Wurfbahn (3) abschleudert, mit einem sich in horizontaler Richtung ebenfalls über die gesamte Arbeitsbreite erstreckenden, dem Bodenbearbeitungswerkzeug zugeordneten Leitelement (5), dessen dem Bodenbearbeitungswerkzeug zugewandte Oberfläche im Winkel zur Horizontalen so geneigt ist, daß sie den Wurfbahnwinkel das vom Bodenbearbeitungswerkzeug abgeschleuderten Erdreiches festlegt, und mit einzelnen, nebeneinander angeordneten, von einem Säkasten aus gespeisten Austrittskanälen für das Saatgut, die in Fahrtrichtung gesehen hinter dem Bodenbearbeitungswerkzeug in den erdreichfreien Raum münden und so angeordnet sind, daß sie die freie Wurfbahn nicht durchsetzen, sich über die gesamte Arbeitsbreite erstrecken und in den erdreichfreien Innenraum der Wurfbahn münden, dadurch gekennzeichnet, daß das rotierende Bodenbearbeitungswerkzeug (2) das einzige, Erdreich freilegende, den Saathorizont bestimmende Werkzeug darstellt, daß das Leitelement als keilförmige Leitschien (5) ausgebildet ist, die geringem Abstand über der vom Bodenbearbeitungswerkzeug freigelegten Erdreichfläche geführt ist, wobei seithich in die Leitschiene (5) ein Rohrbindet (6 ; 16, 17, 18) eingeführt ist, das mit den Anstrittsöffnungen (14) für das Saatgut in einer vom ausgenvorfenen Erdreich geschützten Lage ausgestattet ist und die dem Bodenbearbeitungswerkzeug zugewandte Keilfläche der Leitschiene in bezug auf dessen Umfang derart angeordnet ist, daß das Bodenbearbeitungswerkzeug an einer Tangentiallinie mit der Leitschiene praktisch in Berührung kommt, und daß oberhalb der Leitschiene (5) ein langgestreckter umlaufender Abstreifkörper (37) mit zur Drehachse des Bodenbearbeitungswerkzeugs (2) paralleler Drehachse und mit zum Drehsinn des Bodenbearbeitungswerkzeugs(2) gleichläufigem Drehsinn vorgesehen ist, dessen Umfangsgeschwindigkeit von der des Bodenbearbeitungswerkzeugs abweicht.

2. Vorrichtung nach Anspruch 1, dadurch gekennzeichnet, daß der Abstreifkörper (37) als Vierkantbalken augebildet ist, der aufgesetzte Paddel aufweist.

3. Vorrichtung nach einem der Ansprüche 1 oder 2, dadurch gekennzeichnet, daß hinter und über den Austrittsöffnungen (14) der Austrittskanäle ein quer verlaufendes, das Saatgut streuendes und nach unten lenkendes Abdeckelement (8), z.B. in Form einer Gummiblende, vorgesehen ist.

4. Vorrichtung nach einem der Ansprüche 1-3, dadurch gekennzeichnet, daß die Leitschiene (5) federnd (bei 27) an der Bodenbearbeitungsvorrichtung gelagert ist.

5. Vorrichtung nach einem der Ansprüche 1-4, dadurch gekennzeichnet, daß das rotierende Bodenbearbeitungswerkzeug (2) ein Winkelmesserfräser ist.

6. Vorrichtung nach einem der Ansprüche 1-5, dadurch gekennzeichnet, daß die keilförmige Leitschiene (5) gegenüber dem rotierenden Bodenbearbeitungswerkzeug (2) ebenflächig oder leicht zum Werkzeug hin gewölbt ausgebildet, an der dem Erdreich benachbarten Kante abgerundet und der Keilwinkel an dieser Kante zwischen 30 und 45° gewählt ist.

7. Vorrichtung nach einem der Ansprüche 1-6, dadurch gekennzeichnet, daß die Leitschiene (5) an einem Hebelsystem (28) befestigt ist, dessen am Maschinenrahmen des Bodenbearbeitungswerkzeuges vorgesehene Schwenkachse (27) sowohl in der Höhe als relativ zur Fahrrichtung verstellbar ist.

## Claims

1. Machine for drilling seed (7) comprising a power driven rotary, soil cultivating tool (2) extending across the entire width of operation, which throws the mixture of removed soil and plant residues in a direction opposite to that of movement of the machine in a free trajectory (3) by forming a space free of soil close to the ground, further comprising guide means (5), which extend in a horizontal direction over the entire width of operation, cooparate with said cultivating tool, and the surface of which facing said tool is inclined in view of the horizontal plane in such a manner that said surface determines the angle of trajectory of the soil thrown-off from said tool, and comprising individual outlet channels for the seed, which are arranged side by side, are fed from a seedbox, join the soil free space in the direction of movement of the machine behind said tool and are arranged in such a manner that they do not pass through the free trajectory, extend over the entire width of operation and join the soil free space of the trajectory, characterised in that said rotary soil cultivating tool (2) is the only soil removing tool, which determines the seed horizon, that the guide element is formed as a wedge-like guide rail (5), which is guidedly moved at a small distance above the soil surface exposed by said tool, whereby a bundle of tubes (6 ; 16, 17, 18) is laterally passed into the guide rail (5), said bundle of tubes being provided with the discharge openings (14) for the seed material in a position protected against the ejected soil, and the wedge-like surface of the guide rail facing the tool being arranged relative to the periphery of the tool in such a manner that said tool is practically in contact with the guide rail on a tangential line, and that above the guide rail (5) a longitudinally extending rotating stripper body (37) is provided, which has a rotational axis parallel to the rotational axis of said tool (2) and rotates in the same direction as said tool (2), the peripheral speed of said stripper body being different from that of said tool (2).

2. Machine according to claim 1, characterised in that said stripper body (37) is a square bar, with added paddles.

3. Machine according to one of claims 1 or 2, characterised in that behind and above said outlet openings (14) of said outlet channels a transversally extending cover element (8), for example as a rubber baffle, is provided, which scatters and diverts the seed downwardly.

4. Machine according to one of claims 1-3, characterised in that the guide rail (5) is elastically (at 27) supported on said soil cultivating tool.

5. Machine according to one of claims 1-4, characterised in that said rotary soil cultivating tool (2) is a bent knife cutler.

6. Machine according to one of claims 1-5, characterised in that said wedge-like guide rail (5) relative to said rotary tool (2) is provided planar or slightly curved towards said tool, is rounded at the edge adjacent to the soil and the wedge angle at this edge is chosen between 30° and 45°.

7. Machine according to one of claims 1-6, characterised in that said guide rail (5) is mounted on a lever system (28) the pivot axis (27) of which is supported on the machine frame of said cultivating tool and is adjustable as well in height as relative to the direction of movement.

## Revendications

1. Appareil pour semer (7) comprenant un outil en rotation (2) travaillant la terre et s'étendant sur toute la largeur de travail, qui projette le mélange de terre et de reste ou résidu de plante dans une direction opposée à celle de l'avancement dudit appareil, selon une trajectoire libre en formant un espace sans terre au voisinage du sol, un moyen de guidage (5) s'étendant horizontalement sur toute la largeur de travail, dirigeant le mélange de terre projeté par ledit outil en rotation suivant un angle précis, ledit moyen (5) étant doté de conduits de sortie des semences s'étendant sur toute la largeur de travail et étant disposés derrière l'outil en rotation de façon à déboucher dans l'espace sans terre sans gêner le mélange projeté, ledit appareil ... étant caractérisé en ce que l'outil en rotation (2) est le seul organe qui dégage la terre au

guidage est une barre directrice (5) en forme de coin, qui est dirigée à une faible distance au-dessus de la surface de la terre dégagée, un faisceau (6 ; 16, 17, 18) de tuyaux étant introduit latéralement dans la barre directrice (5) et muni d'ouvertures de sortie (14) pour les semences à un endroit protégé de la terre éjectée, et la surface en forme de coin et tournée vers l'outil de la barre directrice, étant agencée par rapport à la périphérie de l'outil de telle façon que l'outil en... rotation touche presque tangentiellement la barre directrice ; en ce que au-dessus de la barre directrice se trouve un corps racleur (37) s'étendant longitudinalement dont l'axe de rotation est parallèle à celui de l'outil en rotation (2) et qui tourne dans le même sens que ledit outil (2), la vitesse périphérique dudit corps racleur étant différente de celle dudit outil (2).

2. Appareil selon la revendication 1, caractérisé en ce que le corps racleur (37) est une barre carrée qui comporte des palettes.

3. Appareil selon l'une des revendications 1 et 2, caractérisé en ce que, derrière et au-dessus des ouvertures des conduits de sortie (14) desdits canaux, est prévu un élément couvreur (8) conçu par exemple en caoutchouc qui recouvre et dévie vers le bas les semences provenant desdits conduits.

4. Appareil selon l'une des revendications 1 à 3, caractérisé en ce que la barre directrice de guidage (5) est supportée élastiquement (27) par l'outil (2).

5. Appareil selon l'une des revendications 1 à 4, caractérisé en ce que l'outil en rotation (2) est une fraise à couteaux d'angle.

6. Appareil selon l'une des revendications 1 à 5, caractérisé en ce que la barre directrice de guidage en forme de coin (5) est plane par rapport à l'outil (2) ou légèrement bombée vers celui-ci, à une arête arrondie au voisinage du sol, l'angle de coin à cette arête étant choisi entre 30° et 45°.

7. Appareil selon l'une des revendications 1 à 6, caractérisé en ce que la barre directrice de guidage (5) est montée sur un levier (28) dont l'axe (27) est supporté par le cadre de l'appareil et est ajustable en hauteur ainsi que relativement par rapport au sens de l'avancement de l'appareil.

# FIG.1

EP 0 102 557 B2

# FIG.2

# FIG.3

# FIG.4